# EUROPÄISCHE PATENTANMELDUNG

(11) **EP 0 965 279 A2**
(43) Veröffentlichungstag der Anmeldung: **22.12.1999**
(21) Anmeldenummer: 99111565.0
(22) Anmeldetag: 15.06.1999
(51) Int. Cl.: A23N 12/08

(54) **Vorrichtung und Verfahren zum thermischen Behandeln von körnigem Gut**

(30) Priorität: 18.06.1998 DE 29810911 U; 09.11.1998 DE 29819958 U; 07.05.1999 DE 29908268 U; 02.11.1998 DE 19850332
(71) Anmelder: Zoellner, Jobst O. A., 22848 Norderstedt (DE)
(72) Erfinder: Zoellner, Jobst O. A., 22848 Norderstedt (DE)
(74) Vertreter: Jaeschke, Rainer, Dipl.-Ing.

(57) **Zusammenfassung**

Die Erfindung betrifft eine Vorrichtung zum thermischen Behandeln von körnigem Gut, insbesondere zum Rösten von Kaffee oder Erdnüssen, bei welcher das Gut in einem Röster (10,11,111) mit wenigstens einem Behandlungsgas, insbesondere mit heißen Heizgasen, beaufschlagt wird. Gemäß der Erfindung wird vorgeschlagen, daß in dem Röster in Förderrichtung (13,40,114) mehrere hintereinander angeordnete Röstgutaufnahmen (12) vorgesehen sind, die den Röster durchlaufen und in die jeweils eine vorbestimmte Menge des zu behandelnden Gutes einfüllbar ist, wobei die Röstgutaufnahmen von unten durch wenigstens einen Lochboden (14) begrenzt sind und Mittel vorhanden sind, um die Heizgase durch den Lochboden durch das Gut zu leiten.

## Beschreibung

Die Erfindung betrifft eine Vorrichtung zum thermischen Behandeln von körnigem Gut, bei welcher das Gut in einem Röster mit wenigstens einem Behandlungsgas, insbesondere mit heißen Heizgasen, beaufschlagt wird. Insbesondere betrifft die Erfindung eine Vorrichtung zum Rösten von Kaffee oder Erdnüssen oder anderen schüttfähigen Lebensmitteln. Es ist im folgenden überwiegend von Kaffeerösten die Rede, ohne daß dadurch eine Beschränkung verbunden sein soll.

Bei der Verarbeitung von Kaffee ist es erforderlich diesen zu rösten. Dazu sind Röstvorrichtungen vorgesehen, mit denen der Rohkaffee thermisch behandelt werden kann, bis er den gewünschten Röstgrad erhält. Grundsätzlich kann man bei solchen Röstvorrichtungen diskontinuierliche und kontinuierliche Arbeitsverfahren unterscheiden. Bei dem diskontinuierlichen Röstverfahren wird eine vorbestimmte Menge des Gutes über die gewünschte Zeitdauer mit der erforderlichen Temperatur beaufschlagt. Hier sind teilweise relativ hohe Temperaturen erforderlich, um zu gewährleisten, daß die eingefüllte Charge vollständig durchgeröstet wird.

Für große Mengen ist es zweckmäßig, kontinuierlich arbeitende Rösteinrichtungen vorzusehen. Bei bekannten Verfahren wird das Gut kontinuierlich der beispielsweise als Drehrohrofen ausgebildeten Röstkammer zugeführt. Der Drehrohrofen ist mit einem Förderwendel versehen, durch den das Gut durch den Ofen transportiert wird.

Auch ist es bekannt, das Gut über Rüttelsiebe zu transportieren und mit Heizgasen zu beaufschlagen, um eine Art Wirbeischicht zu erzeugen. Das Gut wird dabei über eine Vibrationsschiene transportiert, während die Heizgase von oben auf das Gut aufgebracht werden und das Gut aufwirbeln. Hierbei kann auch bei geringeren Temperaturen geröstet werden. Es besteht allerdings ein Nachteil darin, daß das Gut keine Zwangsbewegung erfährt. Es kann daher vorkommen, daß sich bestimmte Mengen oder auch nur einzelne Körner, wie Kaffeebohnen, innerhalb der Röstkammer unkontrolliert bewegen.

Grundsätzlich ist das Erzeugen einer Wirbelschicht günstig. Beim Kaffeerösten besteht zudem ein Vorteil darin, daß mit dem Heizgasstrom gleichzeitig die gelösten Häutchen mit ausgetragen werden. Auch werden die einzelnen Kaffeebohnen von dem Heizgasstrom zur Wärmeübertragung gleichmäßig umströmt. Die Temperaturen können sehr gering gehalten werden. Da bei einer Wirbelschicht die einzelnen Bohnen keine Zwangsförderung erfahren, wird ein relativ hoher Ausschuß erzeugt.

Der Erfindung liegt die Aufgabe zugrunde, eine kontinuierlich arbeitende Vorrichtung der eingangs geschilderten Art derart anders auszugestalten, daß das Gut zwangsweise durch den Röster transportiert wird. Gemäß einem weiteren Aspekt der Erfindung sollen neben einer idealen Wirbelschicht (Fluidized Bed) andere Verwirbelungen, wie ein Spouding Bed einstellbar sein.

Die Aufgabe wird gemäß der Erfindung dadurch gelöst, daß in dem Röster in Förderrichtung mehrere hintereinander angeordnete Röstgutaufnahmen vorgesehen sind, die den Röster durchlaufen und in die jeweils eine vorbestimmte Menge des zu behandelnden Gutes einfüllbar ist, und daß die Röstgutaufnahmen von unten durch wenigstens einen Lochboden begrenzt sind und Mittel vorhanden sind, um das Behandlungsgas von unten durch den Lochboden durch das Gut zu leiten. Eine solche Anordnung hat den Vorteil, daß das Gut zwar abschnittsweise, aber dennoch im wesentlichen kontinuierlich durch den Röster geführt wird. In dem Röster können stets die gleichen Bedingungen herrschen. Durch die Beaufschlagung des Gutes mit dem Behandlungsgas von unten durch den Lochboden kann sich die gewünschte Wirbelschicht einstellen.

Das Behandlungsgas kann Heizgas oder aber ein Kühlgas, insbesondere Luft sein. Die Röstgutaufnahmen sind im wesentlichen wannenförmig ausgebildet und vorzugsweise vollkommen voneinander getrennt, so daß eine Durchmischung des darin befindlichen Gutes mit dem aus einer benachbarten Röstgutaufnahme zuverlässig vermieden wird. Dadurch können unerwünschte Zirkulationen des Gutes innerhalb des Rösters vermieden werden, und das Röstergebnis bleibt stets konstant.

Grundsätzlich ist die Ausbildung der Röstgutaufnahmen beliebig. Es kann vorgesehen werden, daß die Röstgutaufnahmen als separate Behälter ausgebildet sind, die jeweils mit einem Siebboden versehen sind, der von unten von dem Behandlungsgas durchströmt wird. In dem Röster sind somit mehrere hintereinander angeordnete Röstgutaufnahmen vorhanden, die den Röster in Förderrichtung durchlaufen und in denen jeweils eine vorbestimmte Menge des zu behandelnden Gutes einfüllbar ist. Die Röstgutaufnahmen sind vorzugsweise im wesentlichen gleich groß ausgebildet.

Vorzugsweise sind die Röstgutaufnahmen auf einer Förderkette angeordnet. Es kann auch vorgesehen werden, daß die Röstgutaufnahmen als Unterteilungen auf einem Plattenband ausgebildet sind, dessen Platten einen Lochboden aufweisen. Weiterhin kann es zweckmäßig sein, wenn die Röstgutaufnahmen als aneinandergereihte Röstbehälter ausgebildet sind. Dadurch kann ein gleichmäßiger Transport der einzelnen abgetrennten Röstgutmengen durch den Röster erfolgen.

Es ist zweckmäßig, wenn die Förderkette oder das Plattenband um endständige Umlenkrollen geführt sind derart, daß die entleerten Röstgutaufnahmen unterhalb der gefüllten Röstgutaufnahmen zurückgeführt werden. Die Heizgase werden zwischen dem oberen und dem unteren Kettenabschnitt eingeleitet. Dadurch kann ein kompakter Aufbau erreicht werden. Weiterhin besteht ein Vorteil darin, daß sich die Röstgutaufnahmen stets innerhalb des Rösters befinden.

Die Röstgutaufnahmen sind oben offen. Damit ist zum einen ein Befüllen der Röstgutaufnahmen durch entsprechend taktweise arbeitende Befüllungsmittel leicht möglich. Zum anderen wird erreicht, daß bei einer umlaufenden Kette auch Reste aus den ansonsten leeren Röstgutaufnahmen herausfallen. Unerwünschte Ansammlungen von Gut, das mehrmals den Röster durchläuft, können damit vermieden werden.

Es kann vorgesehen werden, daß die Röstgutaufnahmen einen sich nach oben erweiternden Querschnitt aufweisen. Dadurch können sich günstige Strömungsgeschwindigkeiten einstellen. Es kann aber auch vorgesehen werden, daß die Röstgutaufnahmen oder Röstgutbehälter einen im wesentlichen gleichbleibenden Querschnitt aufweisen. Die Röstgutaufnahmen oder Röstgutbehälter sind dann dicht an dicht nebeneinander angeordnet, ohne daß ein Freiraum dazwischen vorhanden ist. In jedem Fall kann jedoch erreicht werden, daß sich in einer Röstgutaufnahme die gewünschte Wirbelschicht einstellt.

Gemäß einer anderen Ausführungsform der Erfindung ist vorgesehen, daß die Röstgutaufnahmen nach unten offen ausgebildet und über wenigstens einen starren Siebboden geführt werden. Dabei sind die Röstgutaufnahmen von wenigstens einer sich quer zur Förderrichtung erstreckenden vorderen und hinteren aufrechten Begrenzungswand begrenzt, die in Förderrichtung bewegt werden. Da sich die Wirbelschicht nahezu wie eine Flüssigkeit verhält, ist es möglich, die aufrechte Begrenzungswand in horizontaler Richtung, also in Förderrichtung, ohne weiteres zu bewegen. Die Begrenzungswand schiebt die einzelnen Partikel der Wirbelschicht in Förderrichtung, und es tritt die gewünschte Zwangsförderung ein. Insbesondere treten auch hierbei kaum Relativbewegungen zwischen den Partikeln und der Begrenzungswand auf, so daß Beschädigungen vermieden werden können.

Die Röstgutaufnahmen können als allseits geschlossene, oben und unten offen Rahmen ausgebildet sein, die in Förderrichtung bewegt werden. Die seitlichen Begrenzungswände können aber auch starr sein und mit dem Siebboden eine Wanne bilden, in der die vorderen und hinteren Begrenzungswände in Förderrichtung bewegt werden. Jede der genannten Ausgestaltungen der Röstgutaufnahmen begrenzt eine vorbestimmte Menge des Gutes, die so durch den Röster gefördert wird. Zudem wird Vermischen des Gutes zwischen den einzelnen Röstgutaufnahmen durch die Begrenzungswände verhindert. Dabei ist es günstig, wenn die Schütthöhe des Gutes in den Aufnahmen die Höhe der Begrenzungswände nicht übersteigt. Dadurch wird erreicht, daß jedes Korn des Gutes in der vorbestimmten Zeit den Röster durchläuft.

Es kann zweckmäßig sein, wenn die dem Siebboden zugekehrten Stirnkanten der bewegten Begrenzungswände einen Abstand zum Siebboden aufweisen, der kleiner als der Durchmesser, beispielsweise der mittlere Durchmesser der Körnung des zu behandelnden Gutes ist. Auch kann vorgesehen werden, daß die dem Siebboden zugekehrten Stirnkanten der bewegten Begrenzungswände über den Siebboden schleifen. Ferner ist es möglich, daß die dem Siebboden zugekehrten Stirnkanten der bewegten Begrenzungswände mit Bürsten versehen sind, deren Borsten in Richtung auf den Siebboden ausgerichtet sind und über den Siebboden schleifen. Durch diese Maßnahmen wird erreicht, daß alle Körner des Gutes erfaßt und transportiert werden.

Gemäß einer zweckmäßigen Ausgestaltung der Erfindung ist vorgesehen, daß die Röstgutaufnahmen im Bereich der Entnahmestelle des behandelten Gutes in Förderrichtung über den Siebboden hinaus bewegt werden, so daß das Gut vom Siebboden durch die folgende Begrenzungswand in eine darunter liegende Auffangvorrichtung befördert wird. Dadurch kann die Entnahme des fertig behandelten Gutes wesentlich erleichtert werden. Die in Förderrichtung hintere Begrenzungswand schiebt das Gut über das Ende des Siebbodens hinweg, so daß es aufgrund der Schwerkraft nach unten in die Auffangvorrichtung fällt und von dort weitergeleitet werden kann.

Die Förderrichtung durch den Röster kann geradlinig sein. Die Röstgutaufnahmen können dann auf einer linearen Förderkette angeordnet sein. Die Förderkette kann dann nach oben oder unten umgelenkt werden, um die Röstgutaufnahmen im Kreislauf zu führen. Diese Ausführung kann insbesondere für große Röster zweckmäßig sein.

Gemäß einer anderen Ausführungsform der Erfindung kann vorgesehen werden, daß die Förderrichtung einer in einer horizontalen Ebene geschlossenen Kurve entspricht und sich der Siebboden darunter zumindest teilweise über den durch die Röstgutaufnahmen überfahrenen Bereich erstreckt. Die geschlossene Kurve ist vorzugsweise kreisförmig, und die Röstgutaufnahmen sind kreissektorförmig oder kreisringstückförmig ausgebildet. Hiermit kann ein kompakter Aufbau erzielt werden. Auch ist die Ausbildung des Antriebes und der Aufhängung der einzelnen Rahmen der Röstgutaufnahmen mit einfachen Mitteln realisierbar. Der Siebboden kann entsprechend als kreisrunde Scheibe ausgebildet sein, wobei im Bereich der Entnahme ein Kreissektor oder ein Kreisringstück entfernt worden ist. Unter diesem entfernten Kreisringstück kann sich die Auffangvorrichtung für das behandelte Gut befinden. Es kann aber auch eine seitliche Öffnung in einer Seitenwand vorgesehen sein, durch die das Gut ausgetragen wird.

Bei dem thermischen Behandeln von Gut, insbesondere bei dem Rösten von Kaffee besteht häufig der Wunsch bei unterschiedlichen Röstzuständen unterschiedliche Temperaturen einzustellen. Dies war bei bisherigen kontinuierlich arbeitenden Röstvorrichtungen nicht möglich. Gemäß einer weiteren Ausführungsform der Erfindung ist daher vorgesehen, daß der Röster in drei Heizzonen aufweist. Da durch den chargenweisen Transport des Gutes in den einzelnen Röstgutaufnahmen stets gewährleistet ist, daß eine vorbestimmte Menge für eine vorbestimmte Zeit einen bestimmten Bereich des Rösters durchläuft, kann eine Unterteilung des Rösters in unterschiedliche Heizzonen sinnvoll durchgeführt werden. Es ist sichergestellt, daß jede Röstgutaufnahme mit dem Gut eine Heizzone und somit den gewünschten Temperaturbereich nur einmal durchläuft, so daß ein stets gleichbleibendes Ergebnis erzielt werden kann.

Grundsätzlich ist es zweckmäßig, wenn die Heizzonen durch separate Heizgasströme beaufschlagbar sind. Dies hat den Vorteil, daß die gewünschten Temperaturen leichter einstellbar sind.

Bei dem Rösten von Kaffee besteht ein Problem weiterhin darin, daß eine Kaffeebohne während des Röstvorganges ihr Volumen um etwa 100 % vergrößert. Dies hat zur Folge, daß eine eingestellte Gasströmungsgeschwindigkeit, die am Anfang des Röstvorganges ein Wirbelschicht erzeugt, am Ende des Röstvorganges zu hoch ist. Ein Austragen des Gutes durch den Gasstrom kann somit nicht immer vermieden werden. Es ist daher gemäß der Erfindung vorgesehen, daß die Gasströmungsgeschwindigkeiten in den einzelnen Heizzonen unabhängig voneinander in bestimmten Grenzen einstellbar sind. Dazu können beispielsweise separate Gebläse vorgesehen werden. Dadurch wird erreicht, daß die Strömungsgeschwindigkeit besser einstellbar ist. Insbesondere kann damit in jeder Heizzone die jeweils dort für eine Wirbelschicht optimierte Strömungsgeschwindigkeit des Heizgases eingestellt werden.

Es ist offensichtlich, daß mit dieser Vorrichtung optimierte Röstverfahren durchgeführt werden können. Das Gut wird quasi-kontinuierlich durch den Röster geführt. Dadurch kann ein hoher Durchsatz erreicht werden. Durch das Vorsehen von unterschiedlichen Heizzonen kann ein beliebiger Temperaturverlauf während der Röstung eingestellt werden. Durch das Einstellen unterschiedlicher Strömungsgeschwindigkeiten in den einzelnen Zonen kann zudem stets eine Wirbelschicht in den jeweiligen Röstgutaufnahmen erzeugt werden. Die Röstgutaufnahmen und das chargenweise Transportieren des Gutes verhindern dabei, daß einzelnes Gut im Kreis geführt und somit thermisch überlastet wird. Ein stets gleichbleibendes Röstergebnis kann somit erreicht werden.

Gemäß einer bevorzugten Ausführungsform der Erfindung ist vorgesehen, daß sich an die Heizzonen in der Förderebene wenigstens eine Kühlzone anschließt, die durch eine Schleuse von der Heizzone getrennt ist. Dadurch wird erreicht, daß die Heizzone und die Kühlzone sich in einem nach außen geschlossen Behälter befinden. Ferner werden kritische Übergabepunkte vermieden. Vielmehr bleibt das Gut in den Röstgutaufnahmen liegen, ohne daß ein Umfüllen erforderlich wird. Eine Beschädigung des Röstgutes wird somit vermieden. Da die Abkühlung noch innerhalb des Rösters erfolgt, werden zudem produktspezifische Gerüche vermieden.

Weiterhin kann vorgesehen werden, daß die Kühlzone als Befeuchtungszone ausgebildet ist, deren Abgasabführung mit der Gaszuführung der ersten Heizzone verbunden ist. Dies hat den Vorteil, daß die Energie des heißen Abgases aus der Kühlzone zum schnellen Aufheizen der ersten Heizzone ausgenutzt werden kann. Diese erste Heizzone dient zum Austreiben der Feuchtigkeit und benötigt daher viel Energie. Das Abgas der Kühlzone, in der auch Wasser eingeführt wird, ist dennoch im wesentlichen trocken, da die Feuchtigkeit durch das Röstgut aufgenommen wird. Der Energieverbrauch kann daher reduziert werden.

Die Erfindung wird im folgenden anhand der schematischen Zeichnung näher erläutert. Es zeigen:
- Fig. 1: einen Schnitt durch den Röster gemäß der Erfindung,
- Fig. 2: die Draufsicht auf einen oben offenen Röster,
- Fig. 3: die Einzelheit X in Fig. 2,
- Fig. 4: die Draufsicht auf einen oben offenen Röster gemäß einer anderen Ausführungsform,
- Fig. 5: einen Schnitt durch den Röster entlang der Linie A-A,
- Fig. 6: einen Schnitt durch einen anderen Röster gemäß der Erfindung,
- Fig. 7: die Draufsicht auf die Röstbehälterkette gemäß Fig. 6,

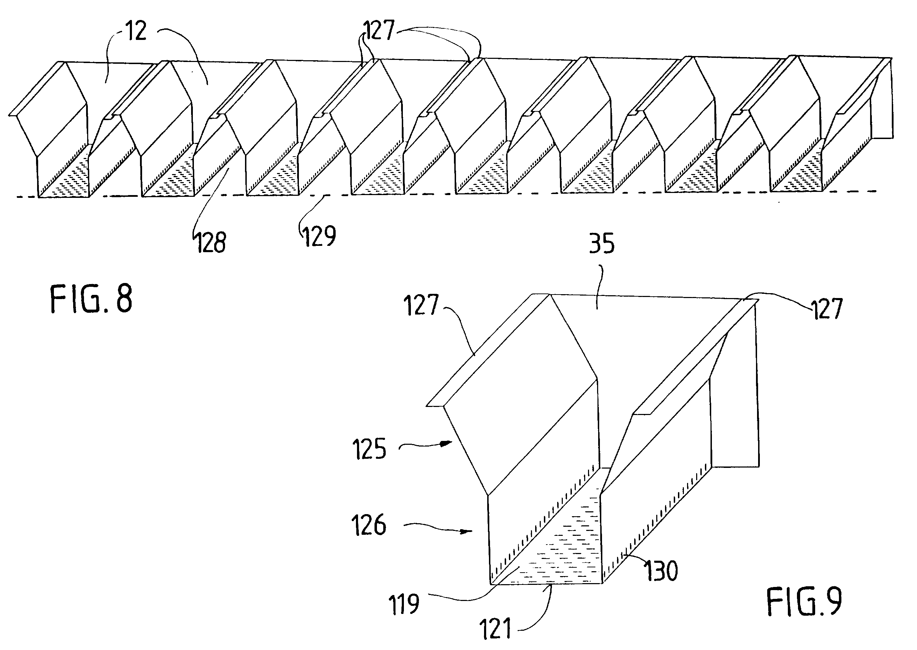

- Fig. 8: eine Röstbehälterkette in perspektivischer geschnittener Darstellung,
- Fig. 9: einen Röstbehälter in vergrößerter Darstellungsform,
- Fig. 10: einen Abschnitt eines Plattenbandes mit Unterteilungen für die Aufnahme des Röstgutes und
- Fig. 11: ein Gesamtschaubild einer Röstanlage.

Der in der Zeichnung dargestellte Röster 10, 11, 111 weist eine Vielzahl von Röstgutaufnahmen 12 auf, die in Förderrichtung 13, 40, 114 durch den Röster transportiert werden. Die Röstgutaufnahmen nehmen eine vorbestimmte Menge des zu behandelnden Gutes auf und transportieren diese Menge getrennt durch den Röster. Die Röstgutaufnahmen bewegen sich dabei vorzugsweise kontinuierlich durch den Röster.

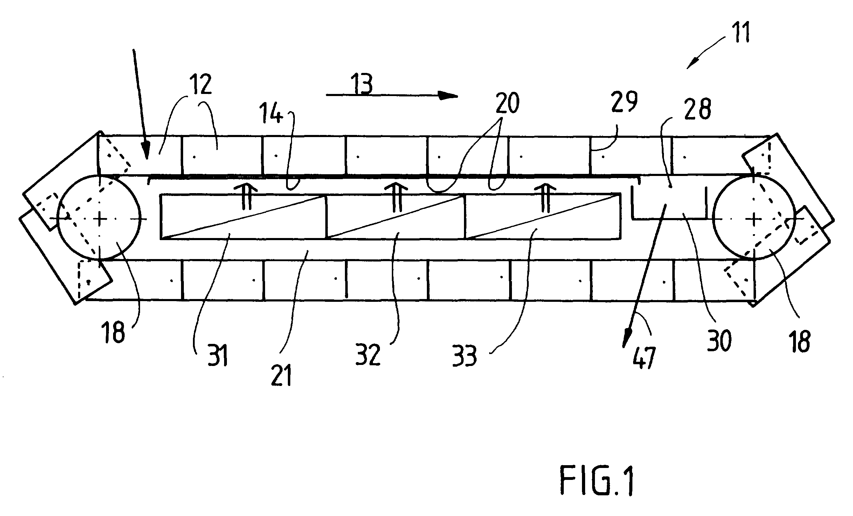

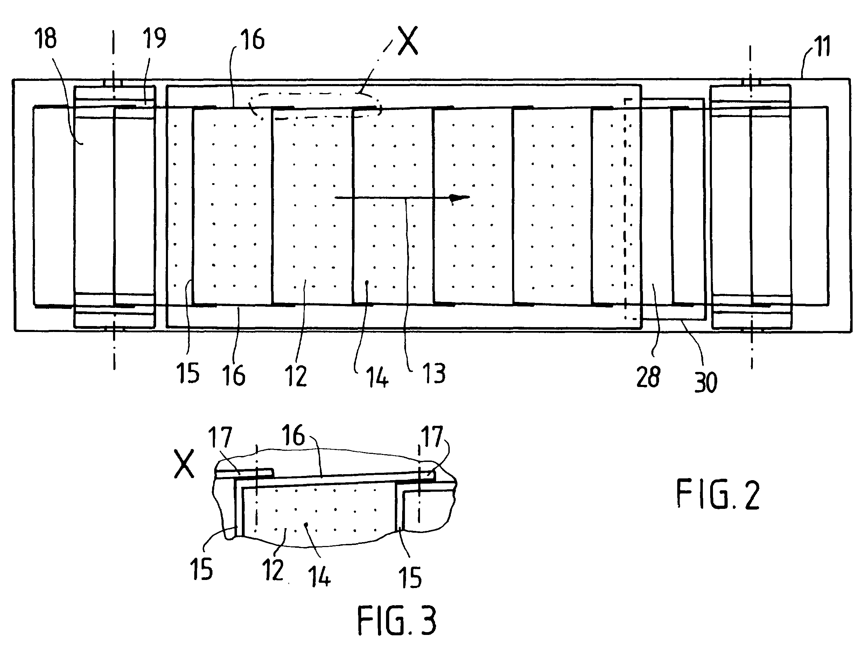

Bei den Ausführungsbeispielen gemäß den Fig. 1 bis 5 sind die Röstgutaufnahmen 12 nach unten offen ausgebildet und werden von unten durch einen im wesentlichen horizontalen, ebenen Siebboden 14 begrenzt. Weiterhin werden die Röstgutaufnahmen durch seitliche und in Förderrichtung vordere und hintere aufrechte, vorzugsweise senkrechte Begrenzungswände begrenzt. Dadurch wird eine nach oben offen Aufnahme für das zu behandelnde Gut geschaffen.

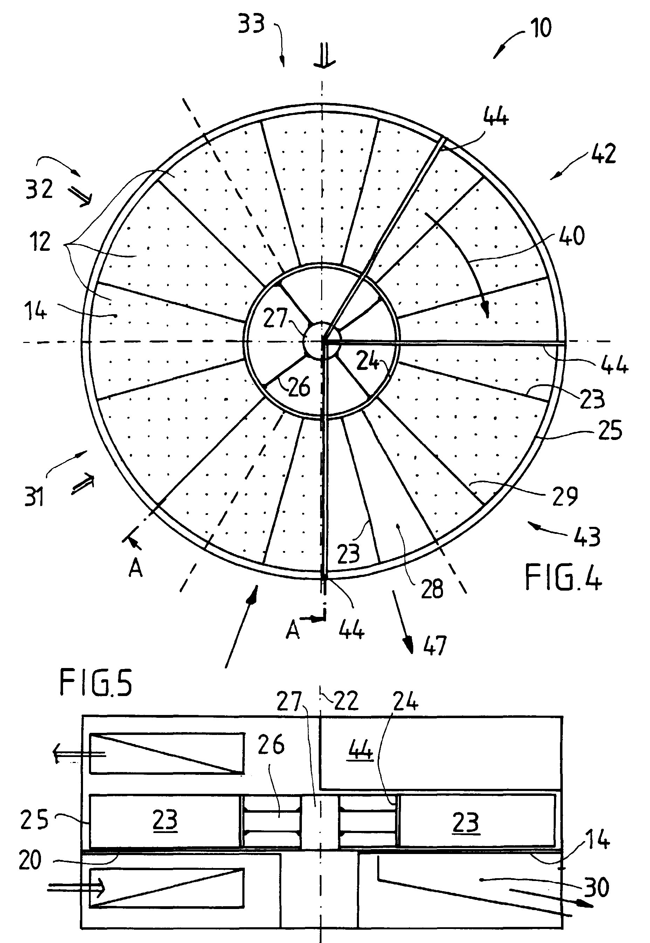

Im einzelnen ist die Anordnung sowohl bei den in den Fig. 1 bis 3 als auch bei den Fig. 4 und 5 gezeigten Röstern 11, 10 so getroffen, daß die Röstgutaufnahmen 12 bzw. deren durch die seitlichen Begrenzungen gebildete Rahmen relativ zu dem starren Siebboden 14 bewegt werden. Der Siebboden 14 ist von unten mit Heiz- und/oder Kühlgasen beaufschlagbar. Es stellt sich eine Wirbelschicht oder ein Fließbett ein, durch das die Röstgutaufnahmen bzw. deren Rahmen gezogen werden. Die Wirbelschicht verhält sich dabei wie eine Flüssigkeit, und die einzelnen Körner erfahren durch die bewegten Begrenzungswände eine Zwangsbewegung durch den Röster. Dadurch wird erreicht, daß jedes Korn des Gutes nur für eine bestimmte Zeit im Röster verbleibt, bevor es ausgetragen wird.

Bei der in den Fig. 1 bis 3 gezeigten Ausführungsform ist die Förderrichtung gradlinig, und die Röstgutaufnahmen 12 sind in Förderrichtung geradlinig hintereinander angeordnet. Eine Röstgutaufnahme weist einen C-förmigen Rahmen aus einer hinteren Begrenzungswand 15 und zwei seitlichen Begrenzungswänden 16 auf. Die freien Enden 17 der Begrenzungswände 16 sind im Bereich der hinteren Begrenzungswand an den seitlichen Begrenzungswände des Rahmens der vorhergehenden Röstgutaufnahme angelenkt. Dadurch wird eine bewegliche Kette gebildet, die über Umlenkrollen 18 umlaufend angetrieben werden kann. Die Umlenkrollen 18 sind mit Führungsschlitzen 19 versehen sein, um ein Abklappen der seitlichen Begrenzungswände zu ermöglichen.

Bei der in den Fig. 1 bis 3 gezeigten Ausführungsform ist die Anordnung so getroffen, daß die leeren Röstgutaufnahmen unterhalb des Siebbodens zurückgeführt werden. Die Zuführung der Heizgase und/oder der Kühlluft erfolgt dabei im Bereich 21 zwischen den Kettenzügen.

In den Fig. 4 und 5 ist eine andere Ausführungsform eines Rösters 10 dargestellt. Hier ist die Förderrichtung 40 kreisrund ausgebildet. Die einzelnen Röstgutaufnahmen 12 sind entlang eines Kreises hintereinander angeordnet und durchlaufen den Röster 10 in einer horizontalen Ebene um eine Achse 22. Der Siebboden 14 ist als ebene Scheibe ausgebildet und erstreckt sich hier im wesentlichen vollständig unterhalb des von den Röstgutaufnahmen überstrichenen Bereichs. Im einzelnen ist die Anordnung so getroffen, daß die Röstgutaufnahmen kreisringstückförmig ausgebildet sind und vorne und hinten durch radial verlaufende Begrenzungswände 23 sowie innen und außen durch einen inneren Ring 24 beziehungsweise einen äußeren Ring 25 begrenzt werden. Der innere Ring 25 ist über Streben 26 mit einer Nabe 27 verbunden, die angetrieben wird. Dadurch werden rundlaufende Röstbehälteraufnahmen gebildet. Zumindest Der äußere Ring 25 kann feststehend ausgebildet sein.

Bei beiden Röstern 10, 11 endet der Siebboden 14 im Bereich der Entnahmestelle 47 und gibt einen Bereich 28 frei, über den die Röstgutaufnahmen in Förderrichtung 13, 40 in gleicher Ebene weiterbewegt werden. Dadurch wird das Gut durch die nachfolgende hintere Begrenzungswand 29 vom Siebboden 14 geschoben und fällt in eine Auffangvorrichtung 30, von der es weitergeleitet werden kann.

Es kann aber auch vorgesehen werden, daß bei feststehenden Seitenwänden, beispielsweise bei einem feststehenden äußeren Ring 25, diese mit einer Austragöffnung versehen sind, durch die das Gut abfließen kann. Dies ist deshalb möglich, da sich insbesondere die ideale Wirbelschicht wie eine Flüssigkeit verhält. Es kann vorgesehen werden, daß der Siebboden in diesem Bereich mit einer leichten Neigung in Richtung auf die Austragsöffnung ausgebildet ist.

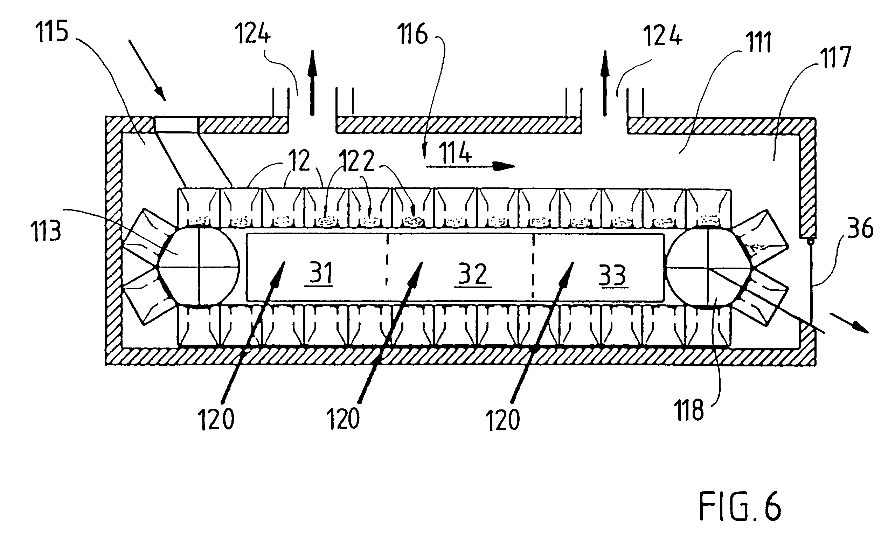

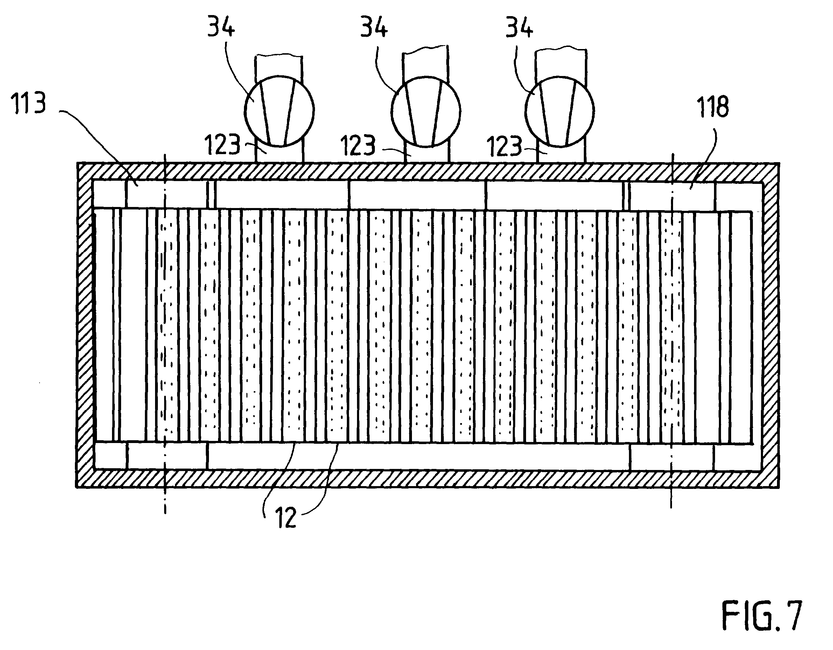

Der in den Fig. 6 und 7 schematisch dargestellte Röster 111 weist im Inneren eine Vielzahl von Röstgutaufnahmen 12 auf, die als Röstbehälter ausgebildet sind und in Form einer umlaufenden Kette um zwei endständige Umlenkrollen 113, 118 geführt sind. Die Röstbehälter können auf einer Kette befestigt sein, die über entsprechende Zahnscheiben der Umlenkrollen angetrieben wird. Auch können die Behälter miteinander gelenkig verbunden sein. Die Röstbehälter 12 werden kontinuierlich durch den Kettenzug in Richtung des Pfeiles 114 durch den Röster transportiert. Grundsätzlich kann auch ein taktweiser Transport vorgesehen werden.

Die Röstbehälter sind oben offen ausgebildet und werden auf der einen, in der Zeichnung linken Seite 115 mit dem zu behandelnden Gut gefüllt. Die entsprechenden Zuführmittel für das Gut sind in der Zeichnung nicht dargestellt. Die Zuführmittel sind im einzelnen so ausgebildet, daß taktweise eine vorbestimmte Menge des zu behandelnden Gutes aufeinanderfolgend in jeden Behälter eingefüllt wird. Die Röstbehälter durchlaufen die Röstzone 116 bis zur anderen, in der Zeichnung rechten Seite 117. Dort werden die Röstbehälter über die endständige Umlenkrolle 118 verschwenkt, so daß der Röstbehälter aufgrund der Schwerkraft entleert wird.

Die Röstgutbehälter 12 sind im wesentlichen wannenförmig ausgebildet und weisen einen Lochboden 119 auf, dessen Lochung kleiner als die Größe der Körnung des zu behandelnden Gutes ist. Der Lochboden wird von der Unterseite 121 mit Heizgas 120 beaufschlagt, das durch die Lochung durch das eingefüllte Gut 122 strömt. Das Heizgas durchströmt das Gut unter Bildung einer Wirbelschicht oder eines zumindest ähnlichen Zustandes. Das Heizgas wird über nicht näher dargestellte Stromführungsmittel 123 zwischen den oberen Kettenzug und den unteren Kettenzug in den Röster eingeführt und in Richtung auf die oberen, gefüllten Röstbehälter geleitet. Der Kettenantrieb und die Zugkette sind dabei so ausgebildet, daß der Lochboden 119 im wesentlichen frei zugänglich bleibt. Das durch das Gut abgekühlte Abgas verläßt den Röster über die Abzüge 124. Die Abgase können in bekannter Weise aufgearbeitet und von mitgerissenen Häutchen, Staub, Kaffeehäutchen und ähnlichen Reststoffen befreit werden.

Die Ausbildung eines Röstbehälters 112 kann so getroffen sein, daß sich der Querschnitt des oberen Abschnitts 125 erweitert, während der untere Abschnitt 126 einen gleichbleibenden Querschnitt aufweist. Dadurch können optimierte Strömungsverhältnisse in bezug auf das zu behandelnde Gut und in bezug auf die zu erzeugende Wirbelschicht eingestellt werden. Insbesondere kann dadurch ein ungewollter Austrag des Gutes über den Gasstrom vermieden werden. Eine gradlinige Wandung ist aber ebenfalls möglich, so daß benachbarte Röstbehälter dicht an dicht nebeneinander angeordnet sind.

Die einander zugewandten oberen Randbereiche benachbarter Röstbehälter sind mit einander überlappenden Kragen 127 versehen, so daß der Raum 128 zwischen zwei Röstbehältern nach oben hin geschlossen ist. Dieser Raum ist bei einer Ausbildung mit gleichbleibenden Querschnitt spaltförmig und somit minimal. Das Heizgas kann nicht ohne weiteres zwischen den Behältern entweichen. Es kann aber auch alternativ oder zusätzlich vorgesehen werden, daß der Bereich 129 der Kette zwischen den unteren Abschnitten 126 der Behälter geschlossen ist. Dies kann durch gelenkige angebrachte Blechbänder oder dergleichen erfolgen.

Bei dem in der Zeichnung dargestellten Ausführungsbeispiel ist der untere Abschnitt des Behälters im Schnitt rechtwinklig ausgebildet und weist einen ebenen Lochboden auf. Es ist selbstverständlich auch möglich, den Lochboden polygonzugförmig oder abgerundet auszubilden. Hierdurch wird eine Reinigung des Behälters erleichtert. Die Lochung kann außerdem auch in den unteren Seitenbereichen 130 eines Behälters vorgesehen werden. Dadurch kann die Strömung zur Erzeugung einer Wirbelschicht weiter beeinflußt werden. Die Seitenwände 135 parallel zur Förderrichtung 114 können eben und geschlossen ausgebildet sein. Durch die Breite der Röstgutaufnahmen senkrecht zur Förderrichtung kann der Durchsatz bestimmt werden.

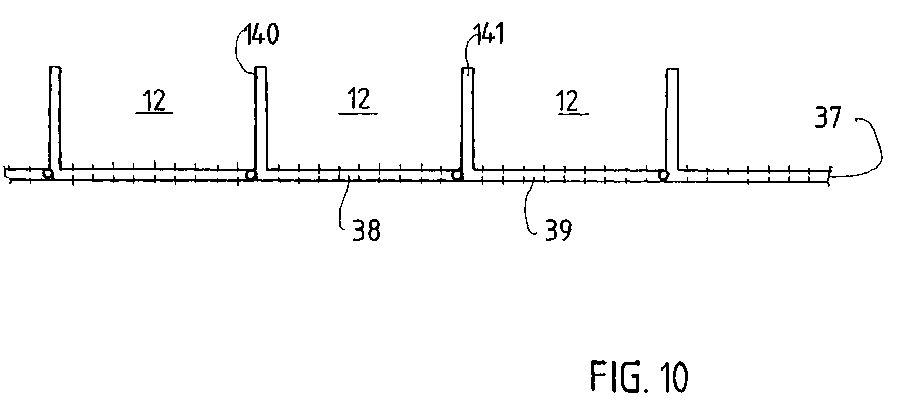

Die Röstgutaufnahmen 12 sind bei dem in Fig. 10 dargestellten Ausführungsbeispiel als wannenförmige Unterteilungen eines Plattenbandes 37 ausgebildet. Die einzelnen Platten sind gelenkig miteinander verbunden. Im einzelnen kann die Anordnung so getroffen sein, daß die Platten 38, 39 im Querschnitt L-förmig ausgebildet sind, so daß durch das kettenförmige Aneinanderreihen die wannenförmigen Aufnahmen gebildet werden. Der hochstehende Steg 140 einer Platte 38 bildet mit dem hochstehenden Steg 141 der vorhergehenden Platte die Begrenzung in Förderrichtung oder umgekehrt. Seitlich können nicht näher dargestellte Begrenzungswände vorgesehen sein. Der Plattenboden ist hierbei als Lochboden ausgebildet.

Bei dem in der Zeichnung dargestellten Ausführungsbeispiel ist die Röstzone in drei Heizzonen 31, 32, 33 unterteilt. Diesen Heizzonen ist jeweils ein Stromführungsmittel 123 und ein Gebläse 34 zugeordnet. Ferner sind im Heizgasstrom Wärmeerzeugungsmittel vorgesehen, die der Übersichtlichkeit halber in der Zeichnung nicht dargestellt sind. Durch diese Anordnung ist es möglich, das Gut in unterschiedlicher Weise während des Transportes durch den Röster thermisch zu behandeln. Die Temperaturen in den einzelnen Heizzonen können optimiert und unabhängig voneinander eingestellt werden, um das gewünschte Röstergebnis zu erhalten.

Durch das Vorsehen von separaten Gebläsen, die die einzelnen Heizzonen mit Heizgas beaufschlagen, ist es möglich, in den unterschiedlichen Zonen unterschiedliche Strömungen des Heizgases einzustellen. Selbstverständlich ist es auch möglich, die Strömungsgeschwindigkeiten durch entsprechende Drosseleinrichtungen und Düseneinrichtungen zu variieren. Mit diesen Maßnahmen kann in den einzelnen Röstbehältern stets eine Wirbelschicht erzeugt werden. Dies ist insbesondere bei der Kaffeeröstung vorteilhaft, da das Volumen des Kafffees während des Röstens um etwa 100 % ansteigt. Für eine Wirbelschicht sind am Ende des Röstvorganges gegebenenfalls andere Strömungsgeschwindigkeiten als am Anfang des Röstvorganges erforderlich.

Bei dem in der Zeichnung dargestellten Ausführungsbeispiel werden die Abgase über gemeinsame Abzüge 24, 124 aus dem Röster 11, 111 abgeführt. Es kann aber auch vorgesehen werden, daß in Förderrichtung voneinander getrennte Abzüge vorgesehen werden. Diese können beispielsweise mit den Heizzonen bzw. Gaszuführzonen korrespondieren. Dadurch können die unterschiedlich gearteten Abgase im Zuge eines Röstvorganges separat und besser aufgearbeitet werden. So weisen die Abgase im ersten Teil des Rösters einen sehr hohen Feuchtegehalt auf, da dort das Wasser aus dem zu röstenden Gut entfernt wird.

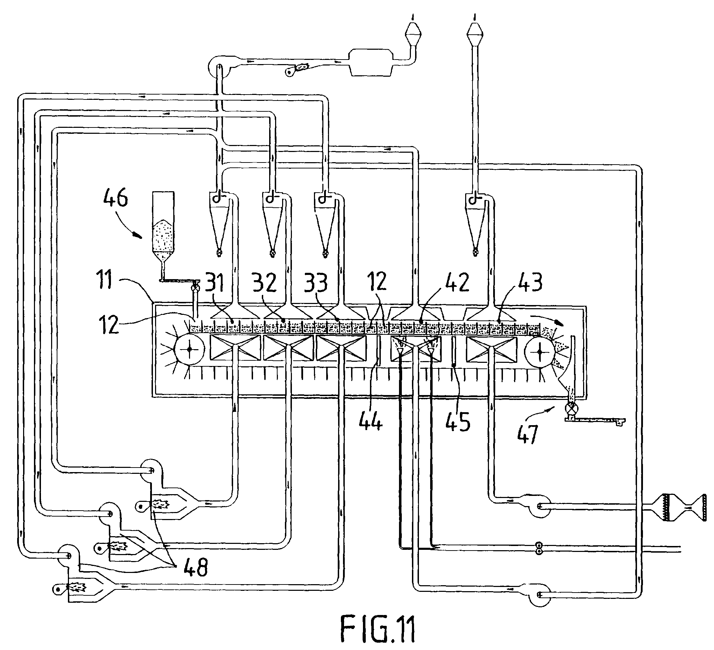

In der Fig. 11 ist ein Gesamtschema einer Röstanlage dargestellt. Es sind die einzelnen Röstgutauffnahmen 12 ersichtlich, die innerhalb des Rösters 11 geführt werden, wobei bezüglich der nachstehenden Erläuterung der Heizzonen und der Abgasführung die Ausbildung der Röstgutaufnahmen im einzelnen unerheblich ist.

Es ist vorgesehen, daß sich an die drei Heizzonen 31, 32, 33 zwei Kühlzonen 42, 43 anschließen, die jeweils durch Schleusen 44, 45 gegenüber den Heizzonen und untereinander abgetrennt sind. Für jede dieser Zone ist ein separates Gebläse 48 vorhanden. Die Schleusen können als einfache, sich bis nahezu zu den senkrechten Begrenzungswänden erstreckende Bleche ausgebildet sein. Bei der in Fig. 4 und 5 gezeigten Ausführungsform sind die einzelnen Zonen 31, 32, 33, 42, 43 in Umfangsrichtung nacheinander angeordnet, und die Kühlzonen werden durch im wesentlichen radial verlaufende Schleusen 44 von den Heizzonen getrennt. Das Röstgut wird portionsweise durch eine Fülleinrichtung 46 in die Röstgutaufnahmen des Röster gegeben und durchläuft in diesen Röstgutaufnahmen die Heizzonen und anschließend die Kühlzonen kontinuierlich. Übergabestellen sind nicht vorhanden, und das fertige geröstete Gut wird an einer Entnahmeeinrichtung 47 aus der Röstanlage abgezogen. Hier ist das Röstgut bereits abgekühlt und nicht mehr empfindlich, so daß eventuelle Beschädigungen vermieden werden können.

Die in Förderrichtung erste Kühlzone 42 ist als Befeuchtungszone ausgebildet. Das erwärmte Abgas wird über entsprechende Abgasführungen wieder der in Förderrichtung ersten Heizzone 31 zugeführt. Ferner kann das dort am Frischgut abgekühlte Abgas beispielsweise der ersten Kühlzone 42 zugeführt werden. Dieses Abgas weist in der Regel eine wesentlich niedrigere Temperatur als das fertig geröstete Gut auf, so daß die gewünschte Kühlwirkung erzielt wird. Dementsprechend weist das in der Kühlzone erwärmte Abgas eine höhere Temperatur als das frisch zugeführte Gut auf. Dadurch kann der Energieverbrauch erheblich reduziert werden. In der zweiten Kühlzone 43 wird das Röstgut durch Luft weiter auf etwa 5° C über Lufttemperatur gekühlt. Die Schleuse verhindert dabei, daß diese Zone mit der Befeuchtungszone in Verbindung steht.

Weiterhin kann die Röstzeit in einfacher Weise variiert werden, indem die Transportgeschwindigkeit der Röstgutaufnahmen bzw. der Röstbehälterkette durch den Röster verändert wird. Die dazu erforderlichen Stell- und Regelmittel sind in der Zeichnung nicht dargestellt. Auf jeden Fall kann die Röstzeit in weiten Grenzen, beispielsweise zwischen 60 sec. und 900 sec. bei der Kaffeeröstung, variiert werden.

Der Lochboden 14, 119 kann mit einer gleichmäßigen Perforierung mit gleichmäßig verteilten Löchern versehen sein. Zum Erzeugen einer idealen Wirbelschicht oder aber auch eines Spouding Beds ist es zweckmäßig, wenn der Lochboden mit perforierten und nicht perforierten Bereichen versehen ist. Diese Bereiche können gleichmäßig oder ungleichmäßig über die Fläche verteilt sein. Die perforierten Bereiche weisen wenigstens ein Loch, vorzugsweise aber mehrere Löcher auf. Es sind demnach Bereiche mit höherem Lochanteil pro Flächeneinheit und Bereiche mit niedrigeren Lochanteil pro Flächenanteil und auch Bereiche ohne Löcher vorhanden, wodurch sich der gewünschte Effekt einstellt. Die Löcher selbst können jeweils im wesentlichen gleich groß und kreisrund oder auch länglich ausgebildet sein.

## Patentansprüche

1. Vorrichtung zum thermischen Behandeln von körnigem Gut, insbesondere zum Rösten von Kaffee oder Erdnüssen, bei welcher das Gut in einem Röster (10, 11, 111) mit wenigstens einem Behandlungsgas, insbesondere mit heißen Heizgasen, beaufschlagt wird, dadurch gekennzeichnet, daß in dem Röster in Förderrichtung (13, 40, 114) mehrere hintereinander angeordnete Röstgutaufnahmen (12) vorgesehen sind, die den Röster durchlaufen und in die jeweils eine vorbestimmte Menge des zu behandelnden Gutes einfüllbar ist, und daß die Röstgutaufnahmen von unten durch wenigstens einen Lochboden (14) begrenzt sind und Mittel vorhanden sind, um die Heizgase von unten durch den Lochboden durch das Gut zu leiten.

2. Vorrichtung nach Anspruch 1, dadurch gekennzeichnet, daß die Röstgutaufnahmen nach unten offen ausgebildet und von wenigstens einer in bezug auf die Förderrichtung vorderen bzw. hinteren Begrenzungswand (15, 23) begrenzt sind, die in Förderrichtung (13, 40) über wenigstens einen feststehenden Lochboden (14) bewegt werden.

3. Vorrichtung nach Anspruch 2, dadurch gekennzeichnet, daß die Röstgutaufnahmen als allseits geschlossene, oben und unten offene Rahmen ausgebildet sind.

4. Vorrichtung nach Anspruch 2, dadurch gekennzeichnet, daß die seitlichen Begrenzungswände feststehen und mit dem Siebboden eine Wanne bilden, in der die vorderen und hinteren Begrenzungswände in Förderrichtung bewegt werden.

5. Vorrichtung nach Anspruch 2, dadurch gekennzeichnet, daß die Röstgutaufnahmen im Bereich der Entnahmestelle (47) des behandelten Gutes in Förderrichtung über den Siebboden hinaus bewegt werden, so daß das Gut vom Siebboden durch die hintere Begrenzungswand (29) in eine darunter liegende Auffangvorrichtung (30) befördert wird.

6. Vorrichtung nach Anspruch 1, dadurch gekennzeichnet, daß die Förderrichtung (13, 114) geradlinig ist.

7. Vorrichtung nach Anspruch 1, dadurch gekennzeichnet, daß die Förderrichtung (40) einer in einer horizontalen Ebene geschlossenen Kurve entspricht und sich der Siebboden darunter zumindest teilweise über den überfahrenen Bereich erstreckt.

8. Vorrichtung nach Anspruch 7, dadurch gekennzeichnet, daß die geschlossene Kurve kreisförmig ist und die Röstgutaufnahmen (12) kreissektorförmig oder kreisringstückförmig ausgebildet sind.

9. Vorrichtung nach Anspruch 1, dadurch gekennzeichnet, daß die Röstgutaufnahmen als separate Röstgutbehälter ausgebildet sind und jeweils wenigstens einen Lochboden (119) aufweisen.

10. Vorrichtung nach Anspruch 1, dadurch gekennzeichnet, daß die Röstgutaufnahmen als Unterteilungen auf einem Plattenband (137) ausgebildet sind, dessen Platten (138, 139) einen Lochboden aufweisen.

11. Vorrichtung nach Anspruch 1, dadurch gekennzeichnet, daß der Röster in Förderrichtung mehrere, vorzugsweise drei Heizzonen (31, 32, 33) aufweist.

12. Vorrichtung nach Anspruch 1, dadurch gekennzeichnet, daß in Förderrichtung getrennte Abgasabführzonen vorgesehen sind.

13. Vorrichtung nach Anspruch 12, dadurch gekennzeichnet, daß die Abgasabführzonen mit den Heizzonen korrespondieren.

14. Vorrichtung nach Anspruch 11, dadurch gekennzeichnet, daß sich an die Heizzonen in der Förderrichtungsebene wenigstens eine Kühlzone (42, 43) anschließt, die durch wenigstens eine Schleuse (44) von den Heizzonen getrennt ist.

15. Vorrichtung nach Anspruch 14, dadurch gekennzeichnet, daß eine Kühlzone (42) als Befeuchtungszone ausgebildet ist, deren Abgasabführung mit der Gaszuführung einer vorhergehenden, vorzugsweise der ersten Heizzone (31) verbunden ist.

16. Vorrichtung nach Anspruch 14, dadurch gekennzeichnet, daß die Abgasabführung zumindest der ersten Heizzone (31) mit der Gaszuführung wenigstens einer Kühlzone (42) verbunden ist.

17. Vorrichtung nach Anspruch 1, dadurch gekennzeichnet, daß die Transportgeschwindigkeit der Röstgutaufnahmen durch den Röster einstellbar ist, um die Röstzeit zu variieren.

18. Vorrichtung nach Anspruch 1, dadurch gekennzeichnet, daß der Lochboden mit perforierten und nicht perforierten Bereichen versehen ist, die gleichmäßig oder ungleichmäßig über die Fläche verteilt sind.

19. Verfahren zum thermischen Behandeln von körnigem Gut, insbesondere zum Rösten von Kaffee oder Erdnüssen, bei welchem das Gut in einem Röster mit wenigstens einem Behandlungsgas, insbesondere mit heißen Heizgasen, beaufschlagt wird, dadurch gekennzeichnet, daß das Gut chargenweise in mehreren hintereinander angeordnete und voneinander separierten Röstgutaufnahmen durch den Röster in Förderrichtung transportiert werden, die von unten durch wenigstens einen Lochboden begrenzt sind, durch den von unten das Behandlungsgas durch das Gut zum Erzeugen einer Wirbeischicht geleitet wird.
